# EUROPEAN PATENT APPLICATION

(11) **EP 4 491 356 A1**
(43) Date of publication of application: **15.01.2025**
(21) Application number: 24183849.9
(22) Date of filing: 21.06.2024
(51) Int. Cl.: B25J 17/02, B25J 19/00, F16F 15/023

(54) **TOOL HOLDER ASSEMBLY**

(30) Priority: 10.07.2023 IT 202300014358
(71) Applicant: B.G.E. S.r.l., 25062 Concesio (BS) (IT)
(72) Inventor: BALOTELLI, Giuseppe, I-25062 Concesio, BRESCIA (IT)
(74) Representative: Chimini, Francesco

(57) **Abstract**

A tool holder assembly (1) comprises a tool holder arm (10) and an arm support unit (12). The arm support unit (12) may be connected to a wrist of a robot and has a frame structure that houses a hollow guide (20) with the possibility of oscillation. The tool holder arm (10) passes through the hollow guide (20) with the possibility of axial translation. The hollow guide (20) is provided with first compensator means (22) suitable for yieldably contrast the axial translation of the tool holder arm (10) with respect to the arm support unit (12). The arm support unit (12) is provided with second compensator means (24) suitable for yieldably contrast an oscillation of the hollow guide (20) and with third compensator means (26) suitable for yieldably contrast a rotation of the tool holder assembly (1) about a rotation axis (Z).

## Description

The present invention relates to a tool holder assembly suitable for being connected to a wrist of a robot or to a fixed support. The tool holder assembly is provided with a tool holder arm suitable for supporting a tool for working or gripping a piece.

As is known, one of the critical aspects associated with working a piece using tools supported by the wrist of a robot or by another rigid support is linked to the fact that, insofar as it is not possible to exactly predict the shape and size of a chip, burrs or the like that are removed during the working of a piece, there is the risk of generating stresses on the tool that are transmitted to the tool support, for example the wrist of a robot, ultimately resulting in the breakage thereof or in any case premature wear.

Furthermore, the rigidity of the connection between the tool and the wrist of a robot or other support does not make it possible, at least in some cases, to optimize working times due to the need to perform working operations several times.

One object of the present invention is to propose a tool holder assembly capable of at least partially resolving the problem of generating and transmitting stresses caused by the contact between the tool and the workpiece.

A further object of the present invention is to provide a tool holder assembly that is capable of adapting more to working requirements by automatically changing the functions thereof, and thus also of working different surfaces using a single assembly or in any case with fewer repetitions with respect to working units according to the prior art.

Such objects are achieved with a tool holder assembly according to claim 1. The dependent claims describe preferred or advantageous embodiments of the tool holder assembly.

The features and the advantages of the tool holder assembly according to the invention shall be made apparent from the following description of preferred embodiments thereof, provided purely by way of nonlimiting example, with reference to the accompanying figures, wherein:
- Fig. 1 is a perspective view of the tool holder assembly according to the invention;

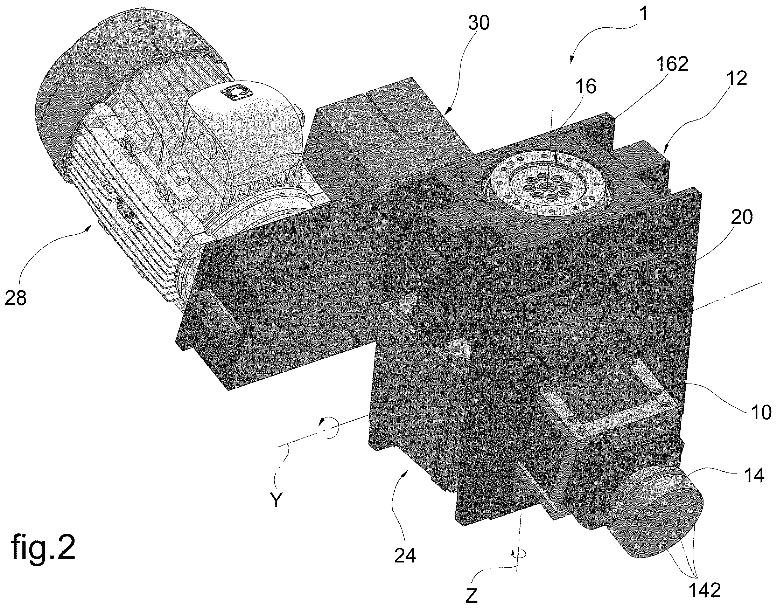

- Fig. 2 is a view similar to the previous one, with the tool holder arm inclined with respect to a horizontal direction;

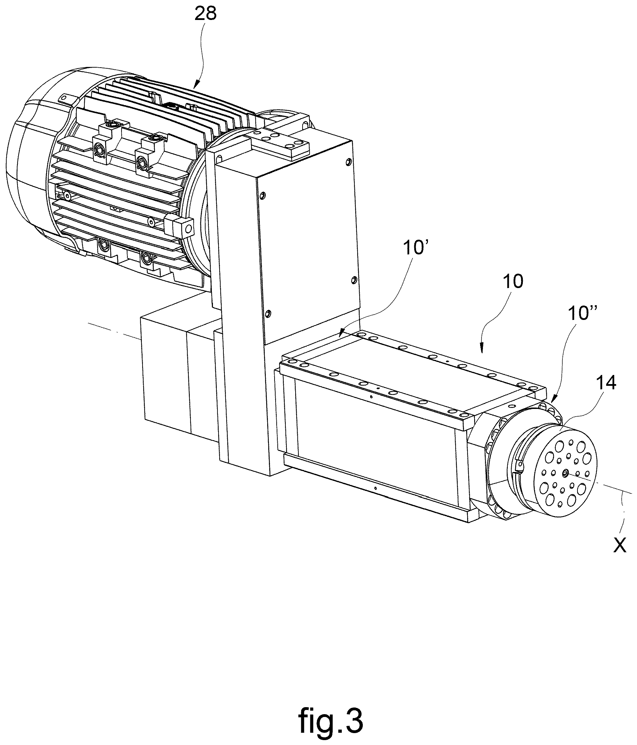

- Fig. 3 is a view of the tool holder assembly, without the arm support unit;
- Fig. 4 is a perspective view of the support group only;
- Fig. 5 and 5a are two perspective views, front and rear, of the hollow guide only;
- Fig. 6 is a perspective view of a portion of the arm support unit that supports the oscillation pin of the hollow guide, which is able to perform an angular movement about a horizontal axis Y;

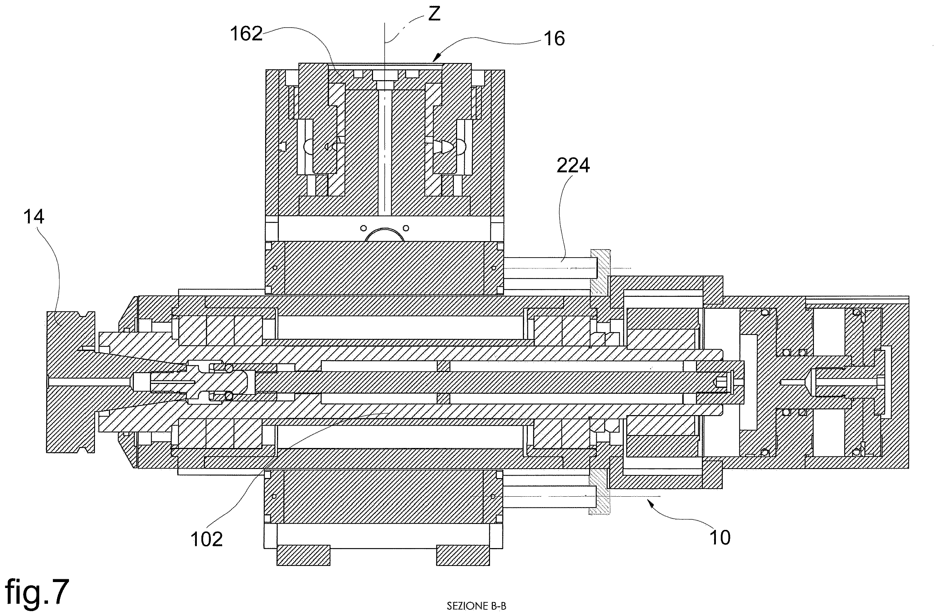

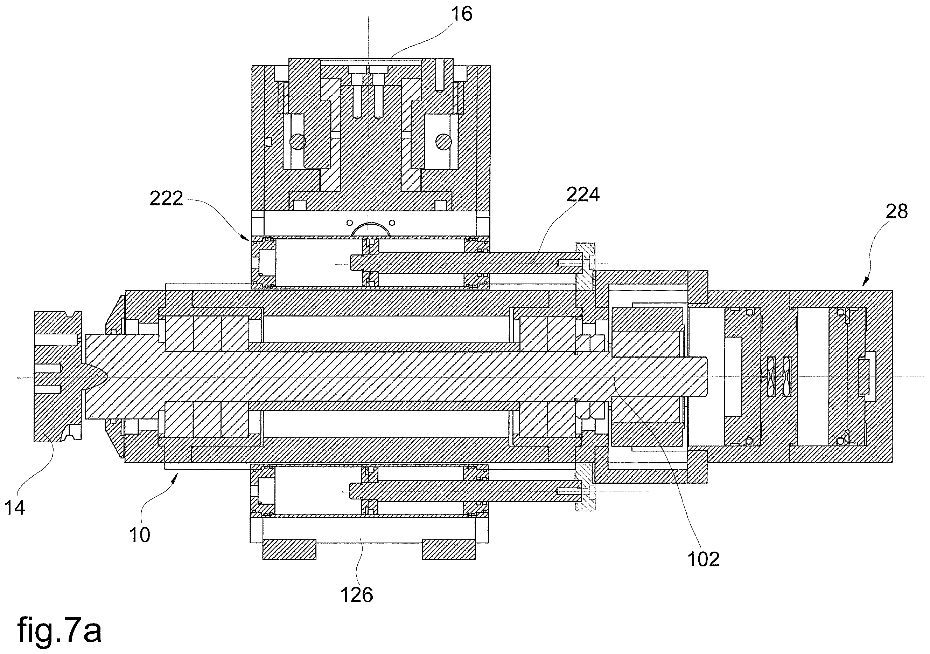

- Fig. 7 and 7a are two axial sections of the tool holder assembly at the tool holder arm, wherein Fig. 7 shows in particular the coupling and the tool changer, whilst Fig. 7a shows in particular the axial compensation means;
- Fig. 8 is a cross section of the tool holder assembly that shows in particular the phase locking of the two angular rotations;
- Fig. 9 and 9a are two cross sections of the arm support unit at the oscillation pin of the hollow guide, tilting about a horizontal axis Y, with the pin in a resting position and in a rotated position, respectively;
- Fig. 10 is a portion of the cross-section of Fig. 9a, with the arm support unit in one embodiment variant;

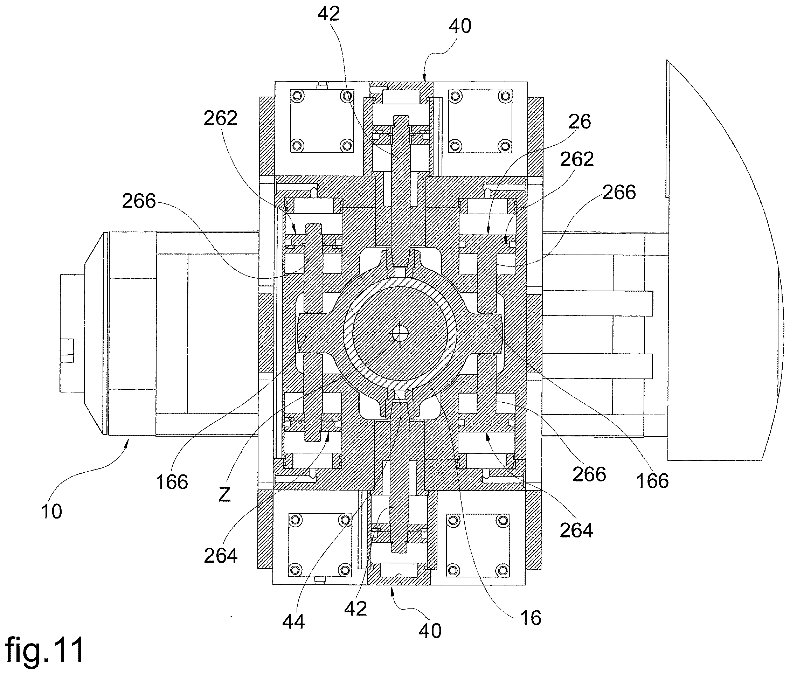

- Fig. 11 is a cross section of the arm support unit at the connection joint to a wrist of a robot, showing, in particular, the means that allow rotation with respect to a vertical axis and the relative phase locking thereof;
- Fig. 12 is, in partial axial section, an example of the two-caliper tool holder arm connection;
- Fig. 13 and 14 is, in partial axial section, an example of connecting the tool holder arm to a revolution multiplier and a revolution reducer, respectively;
- Fig. 15 is, in axial section, an example of connecting the tool holder arm to a smoothing unit;
- Fig. 16 is a front view of a flange for connecting the mandrel of the tool holder assembly to the smoothing unit; and
- Fig. 17 is a partial axial cross-sectional view of a portion of the smoothing unit showing pneumatic deformation cylinders of the smoothing belt of the smoothing unit and one of the compensating cylinders for performing an angular compensation with respect to the translation axis X.

In said drawings, the reference numeral 1 denotes a tool holder assembly according to the invention in the entirety thereof.

In a general embodiment, the tool holder assembly 1 comprises a tool holder arm 10 and an arm support unit 12. The tool holder arm 10 extends along an arm axis X between a proximal end 10' and a distal end 10". At the distal end 10", the tool holder arm 10 is provided with tool coupling means 14 suitable for supporting a tool for working or gripping a piece.

The arm support unit 12 is provided with wrist connection means 16 suitable for connecting, in one embodiment, the arm support unit 12 to a wrist of a robot.

In other embodiments, the wrist connection means 16 are suitable for connecting the arm support unit 12 to a fixed or movable support.

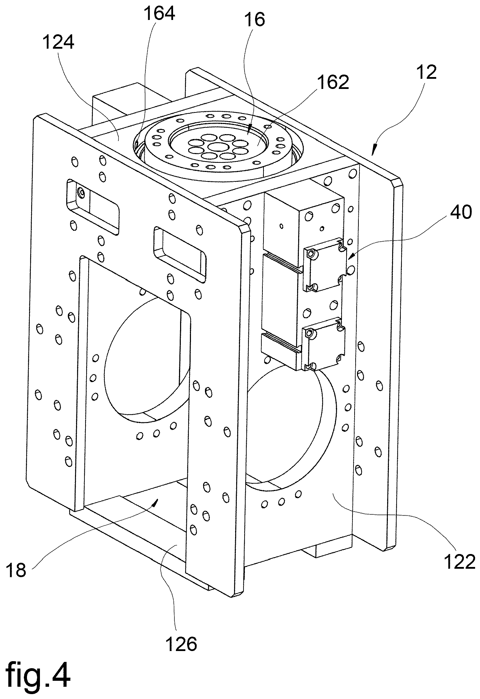

The arm support unit 12 has a framed structure that delimits a central compartment 18. In particular, the central compartment 18 is a through compartment (see Fig. 4).

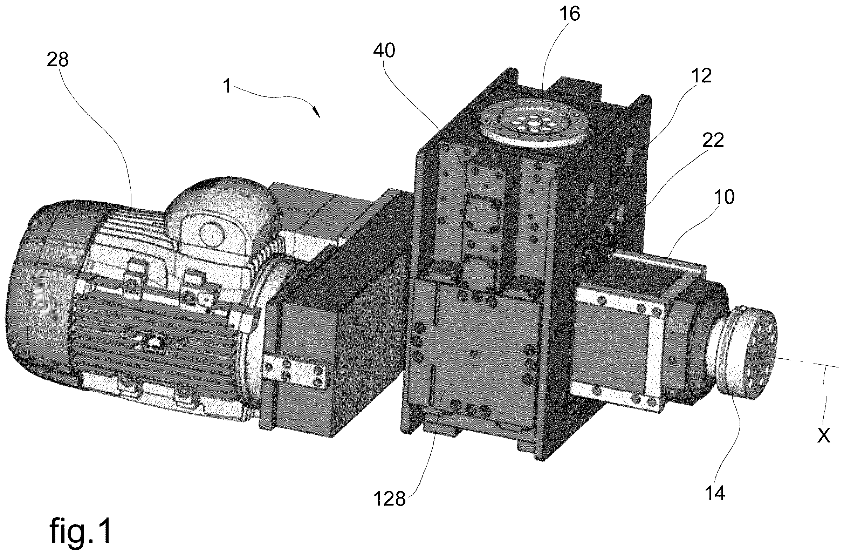

Considering, for simplicity of presentation, the tool holder assembly 1 oriented in such a way as to have a substantially horizontal arm axis X, as shown in Fig. 1, the arm support unit 12 forms a pair of side walls 122, opposite each other and with a vertical extension, a top portion 124 and a base 126.

A hollow guide 20 is housed in the central compartment 18. The hollow guide 20 also forms a through cavity 202. The tool holder arm 10 passes through the hollow guide 20 and is axially slidable along the hollow guide 20.

The hollow guide 20 is provided with first compensator means 22 suitable for yieldably contrasting, that is cushioning, an axial translation of the tool holder arm 10 with respect to the arm support unit 12. Such axial translation may be caused by a reaction force exerted by the workpiece upon a working tool supported by the tool holder assembly 1.

The hollow guide 20 is hinged to the arm support unit so as to oscillate about an oscillation axis Y perpendicular to the arm axis X. The arm support unit 12 is provided with second compensator means 24 suitable for yieldably contrasting, i.e., cushioning, the oscillation of the hollow guide 20 about the oscillation axis Y. Such oscillation of the hollow guide 20 may be caused by a reaction force exerted by the workpiece upon a working tool supported by the tool holder assembly.

The arm support unit 12 is also provided with third compensator means 26 suitable for yieldably contrasting, i.e., cushioning, a rotation of the tool holder assembly 1 about a rotation axis Z perpendicular to the oscillation axis Y and to the arm axis X (when such arm axis X is in a horizontal resting or starting position). In the example shown, the rotation axis Z is a vertical axis. Such rotation may be caused by a reaction force exerted by the workpiece upon a working tool supported by the tool holder assembly.

In one embodiment, the tool holder assembly 1 further comprises a motor apparatus 28. The tool holder arm 10 is operatively connected to the motor apparatus 28 so as to rotate the tool coupling means 14 about the arm axis X.

In one embodiment, the tool holder assembly 1 is also equipped with a tool changing device 30.

In one embodiment, the tool holder assembly 1 is provided with detecting means for detecting the electrical current absorbed by the motor apparatus 28 and control means suitable for controlling the first and/or the second and/or the third compensator means 22; 24; 26 as a function of the electrical current absorbed by the motor apparatus 28.

For example, the first and/or the second and/or the third compensator means 22; 24; 26 are driven by pressurized fluid suitable for exerting a counter force that opposes the force exerted upon the compensator means on the components of the tool holder assembly, in turn subjected to the reaction force exerted by the workpiece. The control means may comprise servo valves suitable for regulating the pressure of the fluid.

In one embodiment, the first compensator means 22 comprise a pack of pneumatic or hydraulic cylinders 222.

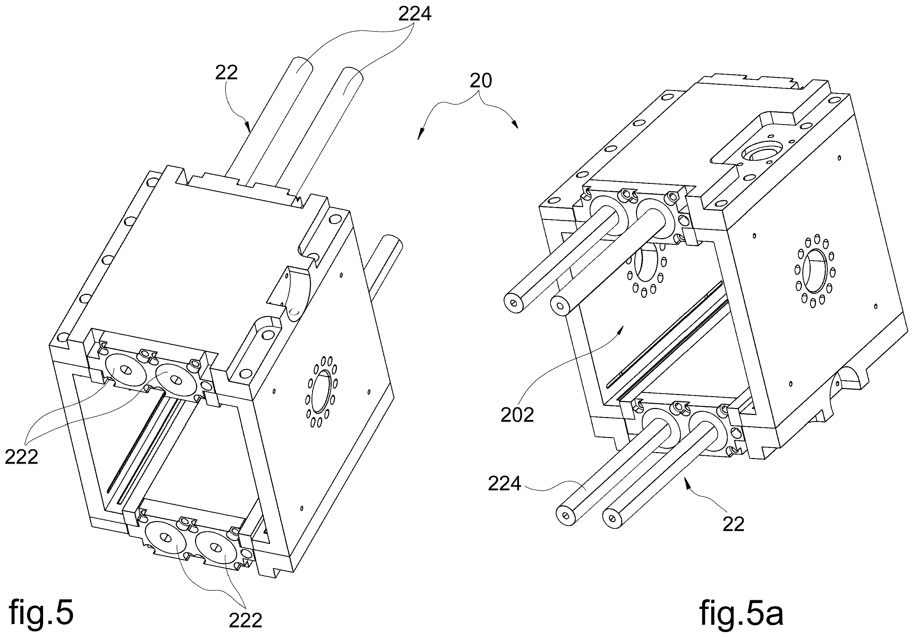

More specifically, the pneumatic or hydraulic cylinders 222 are housed in the body of the hollow guide 20 and have one end of the respective rods 224 integral with the tool holder arm 10. Figures 5 and 5a show, for example, a hollow guide 20, wherein within the upper wall thereof a first pair of pneumatic or hydraulic cylinders 222 is obtained, and wherein within the lower wall thereof a second pair of pneumatic or hydraulic cylinders 222 is obtained.

In one embodiment, the hollow guide 20 is supported by opposite side walls 122 of the arm support unit 12 by means of an oscillation pin 32.

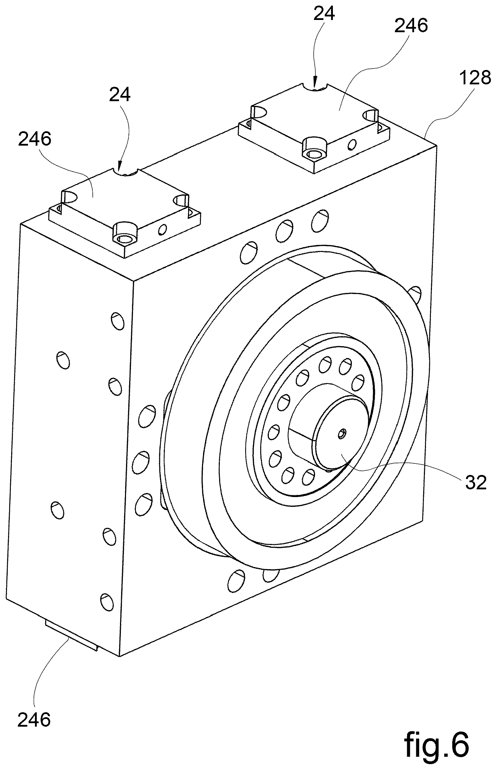

Fig. 6, in particular, shows a pin support block 128 connectable to a respective side wall 122 of the arm support unit 12. This pin support block 128 houses the oscillation pin 32 which is rendered integral to the hollow guide 20.

In one embodiment, the second compensator means 24 comprise at least two opposing pneumatic or hydraulic cylinders 242, 244 obtained in, or supported by, at least one of the opposite side walls 122. For example, the pneumatic or hydraulic cylinders 242, 244 are obtained within the pin support block 128. Fig. 6 shows the heads 246 of such cylinders 242, 244, which close the cylinder chambers 248 obtained within the pin supporting block 128. The end of the rod 250 of such cylinders engages a radial protrusion 322 of the oscillation pin 32 so as to compensate for, i.e. cushion, or yieldably contrast, angular displacements of the oscillation pin about the oscillation axis Y caused by a reaction force that the workpiece may exert upon the tool and thus upon the tool holder arm, by rotating the hollow guide 20.

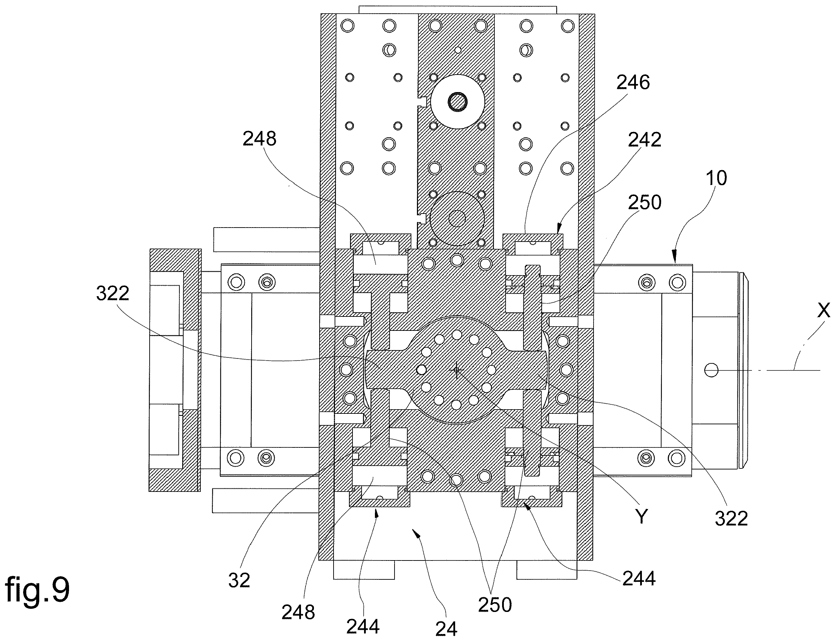

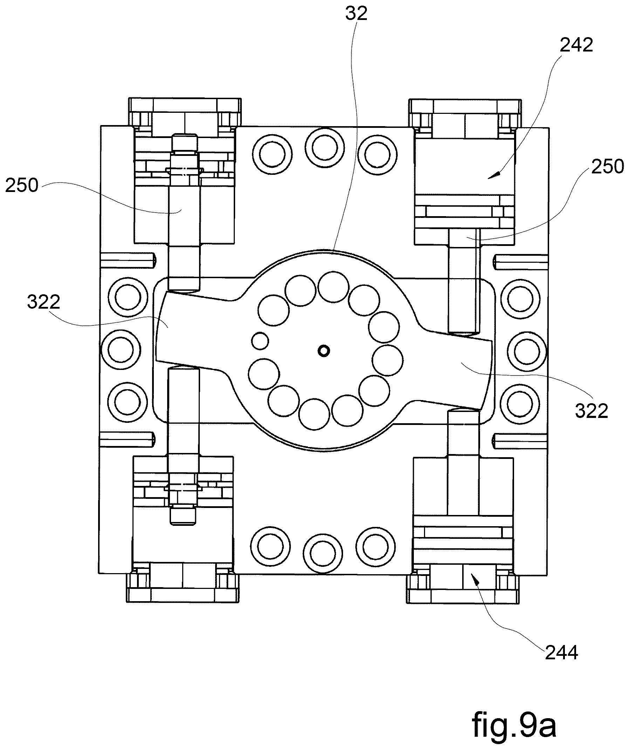

In the sectional views of Fig. 9 and 9a, a cross section of the oscillation pin 32 is shown, wherefrom two diametrically opposite radial appendages 322 extend. The rods 250 of a pair of opposing cylinders 242, 244 act upon each radial appendage 322: the rod of an upper cylinder 242 acts vertically upon an upper side of the radial appendage 322; the rod of a lower cylinder 244 acts upon a lower side of the radial appendage 322.

For example, with respect to a central resting position (Fig. 9), the oscillation pin may rotate between -10° and +10°.

In one embodiment, the wrist connection means 16 comprise a top joint 162 extending about the rotation axis Z and housed with the possibility of rotation within a joint seat 164 obtained within a top portion of the arm support unit 12.

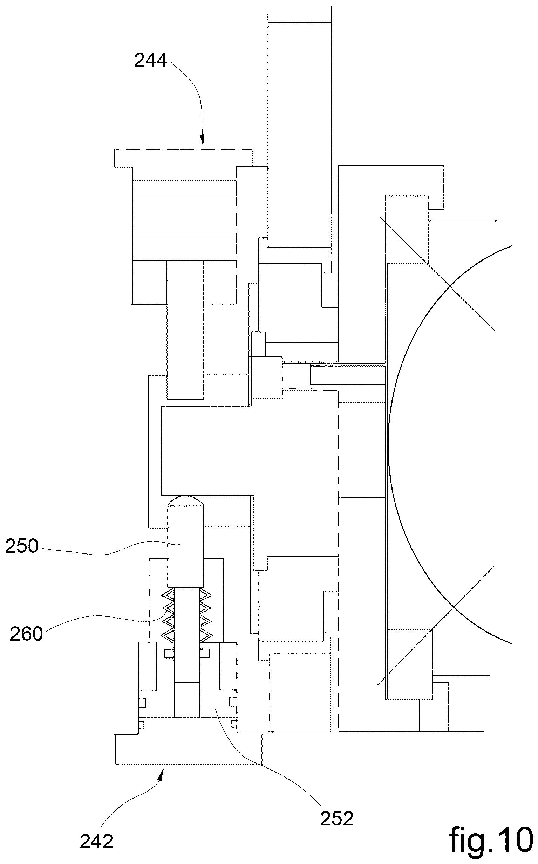

The third compensator means 26 comprise at least two opposing pneumatic or hydraulic cylinders 262, 264 obtained in, or supported by, the top portion of the arm support unit 12 (Fig. 10). The rods 266 of these cylinders 262, 264 engage on opposite sides with a radial abutment 166 of the top joint 162 so as to counteract, i.e., cushion, or yieldably contrast an angular displacement about the rod axis Z of the tool holder assembly 1 relative to the top joint about the rod axis Z.

In the sectional view of Fig. 10, a top joint 162 is shown from which two radial joint appendages 166 extend, diametrically opposite each other. The rods 266 of a pair of opposing cylinders 262, 264 act upon each radial joint appendage 166: the rod of a first cylinder 262 acts horizontally on a first side of the radial joint appendage 166; the rod of a second cylinder 264 acts on a second side, opposite the first, of the radial joint appendage 166.

For example, with respect to a central resting position, the connecting joint may rotate between -25° and +25°.

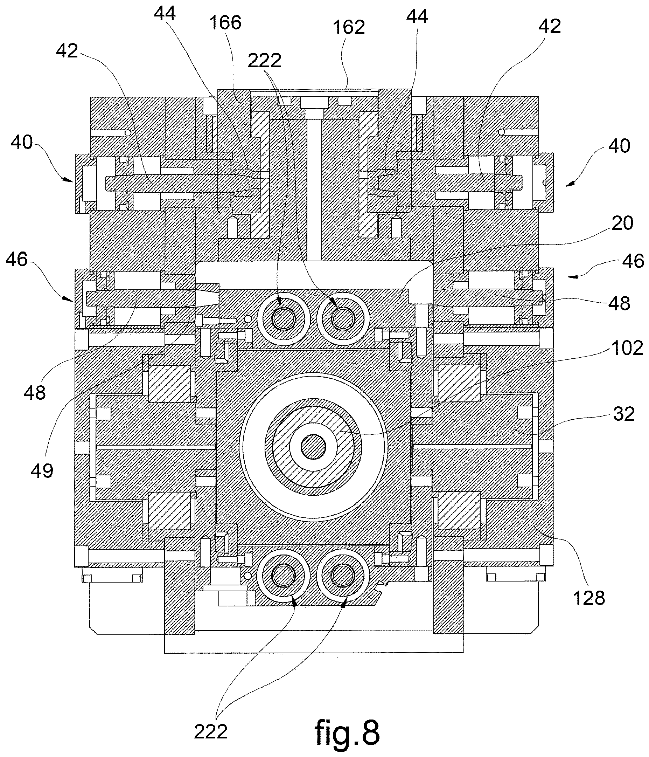

In one embodiment, the arm support unit 12 supports or houses at least one first radial rotation locking cylinder 40 with respect to the vertical axis Z. In the example shown in the figures (in particular Fig. 8), the arm support unit 12 supports or houses a pair of first radial rotation locking cylinders 40, diametrically opposite each other with respect to the top joint 162. The rod 42 of each first radial locking cylinder 40 is operable so to engage a respective rod seat 44 obtained in the top joint 166 so as to angularly lock the tool holder assembly 1 in a predetermined position, for example the central resting position.

In other words, the first radial locking cylinders 40 and the associated rod seats 44 form bolts which, when operated, prevent the rotation of the tool holder assembly 1 with respect to a predetermined angular position with respect to the vertical axis Z.

In one embodiment, the arm support unit 12 supports or houses at least one second radial rod locking cylinder 46 with respect to the horizontal oscillation axis Y. In the example shown in the figures (in particular Fig. 8), the arm support unit 12 supports or houses a pair of second radial rotation locking cylinders 46, diametrically opposite each other with respect to the hollow guide 12. The rod 48 of each second radial locking cylinder 46 is operable so as to engage a respective rod seat 49 obtained within the hollow guide 12 so as to angularly lock the hollow guide 12 in a predetermined position.

In other words, the second radial locking cylinders 46 and the relative rod seats 49 form bolts which, when operated, prevent the oscillation of the hollow guide 12 about the oscillation axis Y.

Returning now to the tool holder arm 10, in one embodiment, a mandrel 102, i.e., a shaft, is housed therein. Such mandrel 102 is operatively connected to the motor apparatus and, at the opposite end, to the tool coupling means 14.

In one embodiment, the tool coupling means 14 comprise a couplable cone, such as an ISO cone.

Furthermore, a plurality of electrical and/or pneumatic power supplies 142 may be obtained in the tool coupling means 14 for the electrical and/or pneumatic actuation of a tool, tool holder or gripping device connected to the tool coupling means 14.

In some embodiments, the first and/or second and/or third compensator means 22, 24, 26 are associated with position sensors, for example linear transducers, that are capable of detecting the position of the moving elements of such compensator means and consequently allowing the position assumed by the tool coupling means to be determined. In this way, it is also possible to obtain information concerning the components of the constraining reaction of the workpiece on the tool.

The tool holder assembly described above makes it possible to create yielding axial and angular constraints that, upon contact between the tool and the workpiece, compensate for the reaction force offered by the workpiece by dampening the mechanical stresses and thus protecting the wrist of the robot and in particular the gear motor of the robot that provides precision to the rotation axis.

Furthermore, in one embodiment that provides for the use, as compensator means, of pneumatic or hydraulic cylinders, such pneumatic or hydraulic cylinders may also be actively used as actuators that are operable using a pressurized fluid in order to make the working tool mounted on the tool holder assembly exert a calibrated pressure upon the workpiece.

This therefore make it possible to both compensate to avoid collisions or high stresses and to protect the wrist of the robot, as well as to move the tool coupling means for the working of the piece.

The example of a tool holder assembly described is provided with a system compensated on one linear axis (axis X) and on two angular axes (axes Y and Z). This is to allow for all possible movements for most working operations. It is clear that the concept of yielding constraints, or variable rigidity constraints, described above may be applied to more than three axes, for example five.

For example, by virtue of pneumatic peripheral power supplies 142, a fourth compensation with respect to a rotation about the translation axis X may be obtained.

The tool holder assembly described allows for the axial compensation (along the arm axis X) directly through the body of said hollow guide, which integrates the first compensator means, for example the two pairs of pneumatic or hydraulic cylinders, which make it possible to contrast the yielding of the constraint. In this way, the weights that the robot or other support must bear are also reduced. This makes it possible to have robots that are smaller in size and weight.

In the case of using pneumatic or hydraulic cylinders to obtain the axial compensation, to compensate for the yielding of the constraint the piston retracts by an amount that is a function of the load that is gradually absorbed as the work progresses. If a linear transducer is also used on such contrast pistons, the exact stress that is absorbed by the compensator may be verified.

By equipping all the linear and angular axes with position transducers it is possible to combine the position information provided by the position sensor with the information relating to the current absorption provided by the inverter or by the actuation, so as to obtain precise and reliable data on the stress states of the individual constraints and on the direction of the loads.

By virtue of such information obtained from the sensors and from the motor apparatus, it is therefore possible to manage, in a closed loop, the contrast pressure of the pneumatic or hydraulic compensators. By managing the contrast pressure, a more or less high rigidity of the constraint is obtained as a function of the absorption of said motor. For example, the more the contrast pistons retract due to the specific stress whereto they are subjected, the more it is necessary to verify the electrical current absorption of said motor.

A plurality of devices may be mounted on the proposed tool holder assembly, also by virtue of the possible presence of a couplable cone, for example an ISO cone, whereupon up to nine independent power supplies may also be obtained. Thus, in addition to gripping and working tools, a revolution multiplier or a revolution reducer may also be mounted on the tool holder arm.

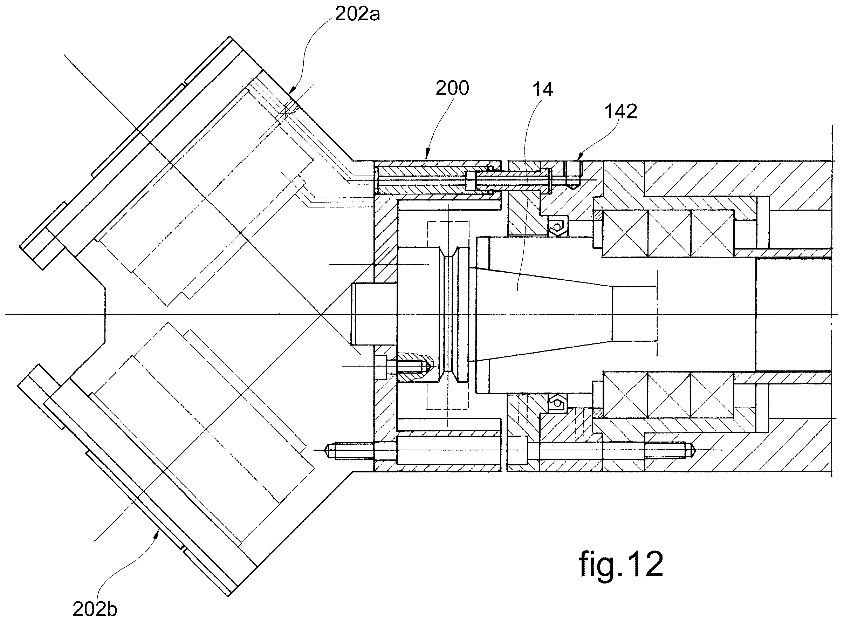

For example, Fig. 12 shows the end of the tool holder arm 10 whereupon a couplable cone 14, such as an ISO cone, is mounted. The couplable cone 14 supports a gripper attachment 200 to which a pair of pneumatic grippers 202a, 202b is operatively connected. Also noted is one of the peripheral pneumatic power supplies 142 which enter radially into the tool holder arm 10 and supply the pneumatic grippers passing through the gripper attachment 200 with power.

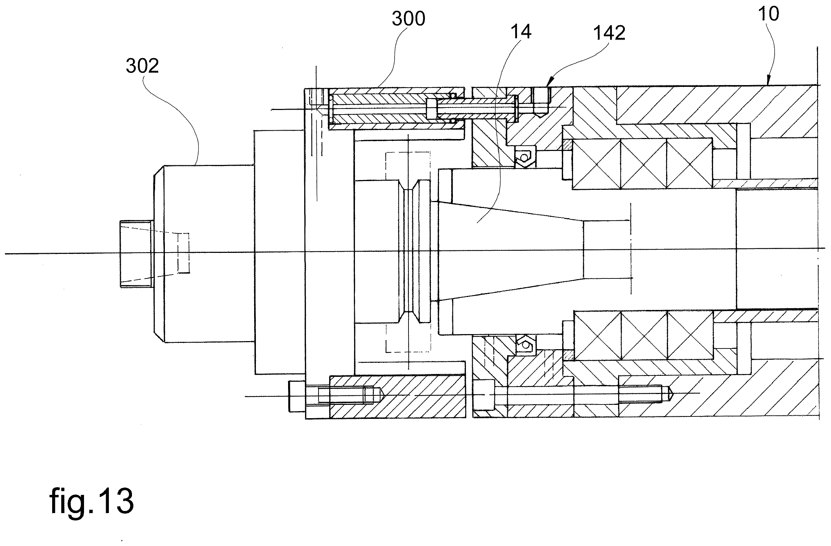

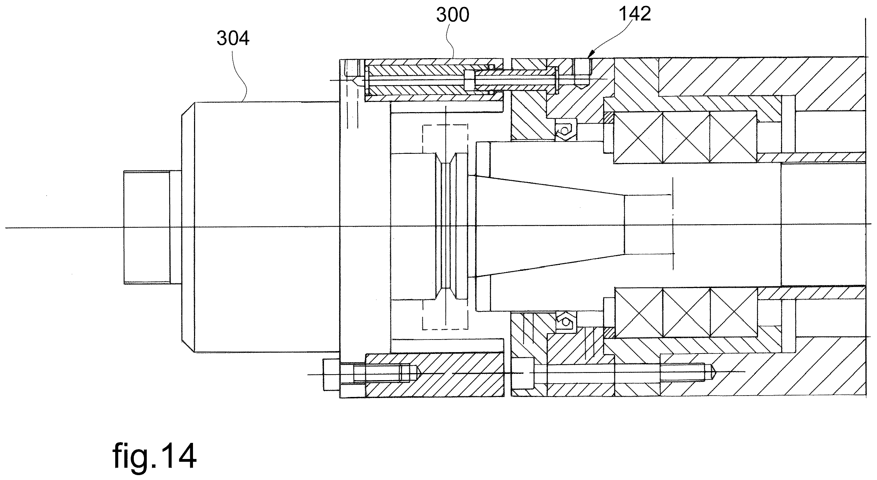

Fig. 13 and 14 show the end of the tool holder arm 10 whereupon a couplable cone 14, such as an ISO cone, is mounted. The couplable cone 14 supports a multiplier attachment 300 whereto a revolution multiplier 302 (Fig. 13) or a revolution reducer 304 (Fig. 14) is operatively connected. Also noted is one of the peripheral pneumatic supplies 142 that radially enter the tool holder arm 10 and supply the revolution multiplier 302 or the revolution reducer 304 by passing through the multiplier attachment 300.

In the case of the revolution reducer 304, there is the advantage that work may be performed without the mandrel of the tool holder arm having to turn at very high speeds. The mandrel may then rotate at low rpm whilst expressing high torque.

If high speeds are required then it is possible to mount the revolution multiplier 302 on the tool coupling means 14 which rotate at high speed with a small mass. It is therefore possible to contain the overall mass of the assembly, limiting vibrations and stresses.

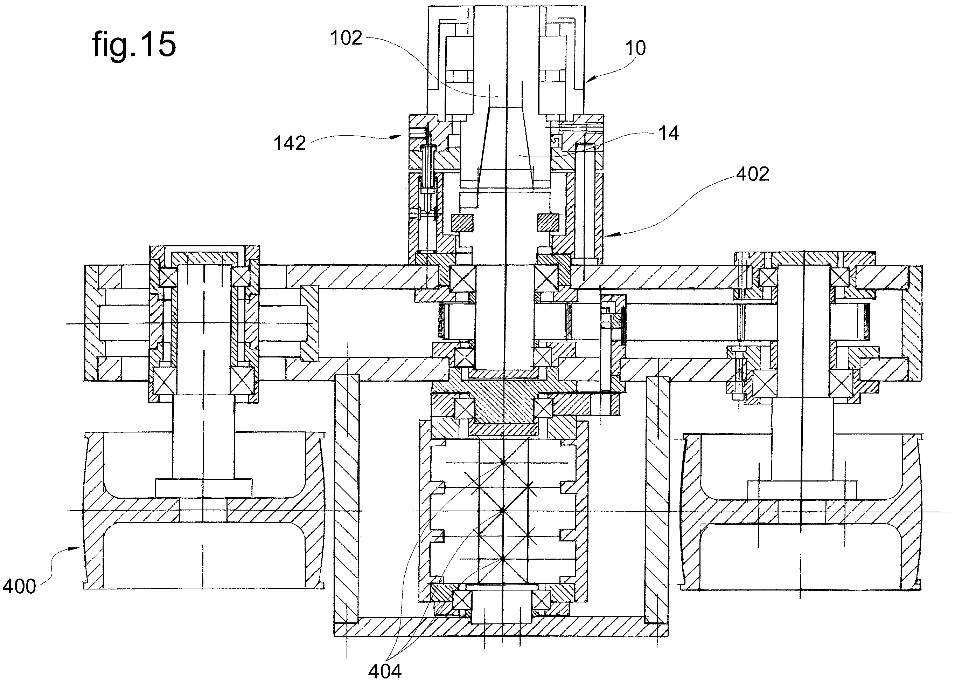

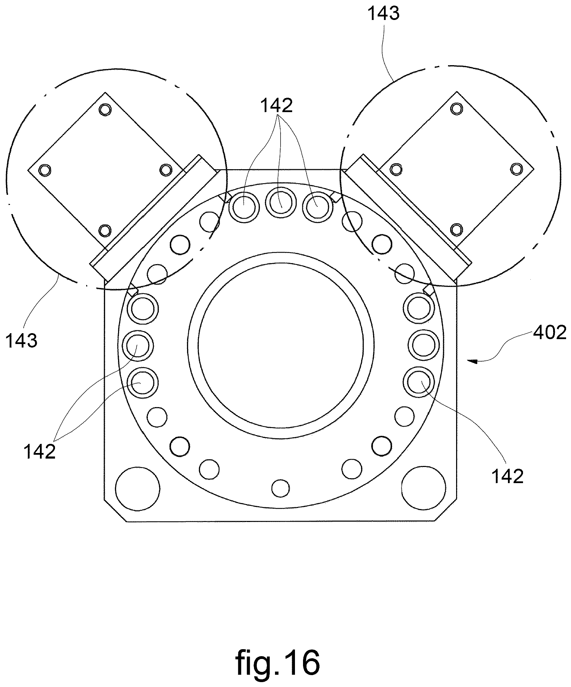

In one possible application shown in Fig. 15, the tool holder assembly 1 (wherein the distal end of the tool holder arm 10 provided with a couplable cone 14 is shown) mounts a smoothing unit 400 with a smoothing belt 401 which may be placed in rotation by the mandrel 102. The smoothing unit 400 is connected to the mandrel 102 by means of a connection flange 402. Such connection flange 402, shown in Fig. 16, receives and carries outwards a plurality of pneumatic power supplies 142 (nine in the example shown) and electrical connections (two groups of electrical contacts 143 are mounted on the connection flange 402).

By virtue of such pneumatic 142 and electric 143 power supplies, the smoothing unit 400 may be provided with pneumatic deformation cylinders 404 suitable for deforming the smoothing belt 401 so as to work profiled pieces having various shapes.

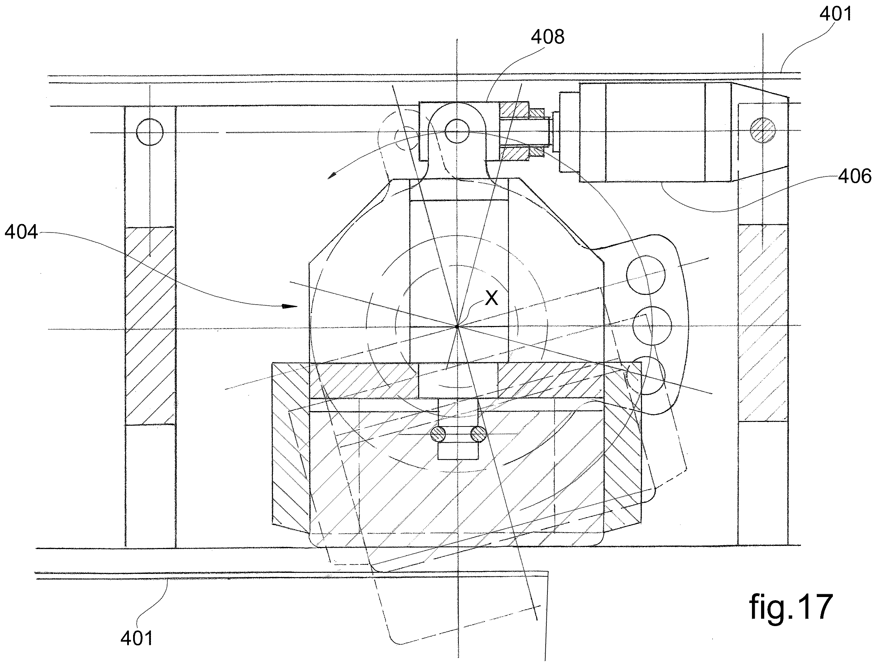

Furthermore, as mentioned above, the smoothing unit 400 may be equipped with two compensating cylinders 406 (one thereof is shown in Fig. 17), supplied by the tool holder group 1 through the pneumatic power supplies 142 distributed by the flange 402, arranged in such a way as to act along respective opposite and orthogonal directions with respect to the translation axis X, for example on an axial support element 408 of the pneumatic deformation cylinders 404, in order to act as compensator means with respect to angular displacements with respect to the translation axis X.

The tool holder assembly equipped with a tool changing unit may initially mount a gripper for loading and unloading a machine, a working center, a numerically-controlled lathe, a press, etc. Once the molded workpiece is unloaded, the tool holder assembly may position it on a workstation and, by replacing the gripper with a tool, may perform various working operations, such as deburring, blanking, cutting, or other semi-finishing operations on the workpiece to be produced. Therefore, in addition to having great flexibility in performing working operations, the tool holder assembly makes it possible for the use of a loading and unloading robot to be avoided. In other words, the assembly may act as a pick-and-place device.

Returning now to the compensation feature, in one embodiment it may be implemented, as described above, using pneumatic cylinders. However, insofar as air is a compressible fluid, if vibrations are transmitted to the tool holder assembly during working operations then a high contrast capacity is not reached. To improve the contrast capacity, the pressure stress of the piston does not come into direct contact with the constraint, but a pack of cup springs is interposed between the piston and the constraint. The cup springs allow the vibrational effect to be completely dampened, and the piston thrust system serves only to preload the cup springs.

For example, Fig. 10 shows a portion of the arm support unit 12 at the pair of opposing cylinders 242, 244. A cup spring pack 260 is interposed between the piston 252 and the rod 250 of one or more of such cylinders.

It should be noted that, when implemented using pneumatic or hydraulic cylinders, the compensator means 22, 24, 26 may function not only as compensators but also as propulsion units, both for linear and angular displacements, in any case avoiding excessive stress upon the constraints. This effect is still more evident when the position of the movable members of the assembly is detected by transducers in such a way as to control the servo valves that manage the contrast or cushioning pressure or the active thrust pressure.

It should be noted that by virtue of the bolts the tool holder assembly may become rigid when necessary, for example during the tool change.

In conclusion, the tool holder assembly may be used as an operating unit, as a screwdriver, as a deburring system, as a finishing system for the workpiece. In particular, when a workpiece is locked onto a working center, such as in a vice, the side thereof is hidden. The tool holder assembly may then pick up the workpiece by taking it from the worked side thereof and rearranging it in any position that leaves free the part to be worked. The tool holder assembly therefore allows for a workpiece operation, such as deburring, blanking, screwing, etc., to be repeated.

A person skilled in the art may make several changes, adjustments, adaptations and replacements of elements with other functionally equivalent ones to the embodiments of the tool holder assembly according to the invention in order to meet incidental needs, without departing from the scope of the following claims. Each of the features described as belonging to a possible embodiment may be obtained independently of the other described embodiments.

## Claims

1. A tool holder assembly (1), comprising a tool holder arm (10) and an arm support unit (12), where the tool holder arm (10) extends along an arm axis (X) between a proximal end (10') and a distal end (10") and is provided, at the distal end (10"), with tool coupling means (14) suitable for support a tool for working or gripping a piece, and where the arm support unit (12) is provided with wrist connection means (16) suitable for connect the arm support unit (12) to a wrist of a robot, wherein the arm support unit (12) has a frame-shaped structure delimiting a central compartment (18), wherein a hollow guide (20) is housed in the central compartment (18), with possibility of oscillation about an oscillation axis (Y) perpendicular to the arm axis (X), the tool holder arm (10) passing through the hollow guide (20) with possibility of axial translation with respect to the hollow guide (20), wherein the hollow guide (20) is provided with first compensator means (22) suitable for yieldably contrast the axial translation of the tool holder arm (10) with respect to the arm support unit (12), wherein the arm support unit (12) is provided with second compensator means (24) suitable for yieldably contrast an oscillation of the hollow guide (20) about an oscillation axis (Y) perpendicular to the arm axis (X) and with third compensator means (26) suitable for yieldably contrast a rotation of the tool holder assembly (1) about a rotation axis (Z) perpendicular to the arm axis (X) and the oscillation axis (Y).

2. A tool holder assembly according to claim 1, further comprising a motor apparatus (28), the tool holder arm (10) being operatively connected to the motor apparatus (28) so as to rotate the tool coupling means (14) about the arm axis (X).

3. A tool holder assembly according to claim 2, further comprising:
- current detecting means for detecting the current absorbed by the motor apparatus;
- control means suitable for control the contrast strength of the first and/or second and/or third compensator means as a function of the current absorbed by the motor apparatus.

4. A tool holder assembly according to any one of the preceding claims, wherein the first and/or second and/or third compensator means are actuated by a pressurized fluid.

5. A tool holder assembly according to claim 4, wherein the control means comprise servo valves suitable for adjust the fluid pressure.

6. A tool holder assembly according to any one of the preceding claims, wherein the first compensator means (22) comprise a pack of pneumatic or hydraulic cylinders (222) .

7. A tool holder assembly according to claim 6, wherein the pneumatic or hydraulic cylinders (222) are housed in the body of the hollow guide (20) and have one end of the rod (224) integral with the tool holder arm (10).

8. A tool holder assembly according to any one of the preceding claims, wherein the hollow guide (20) is supported by opposite side walls (122) of the arm support unit (12) by means of an oscillation pin (32), and wherein the second compensator means (24) comprise at least two opposite pneumatic or hydraulic cylinders (242, 244) obtained in, or supported by, at least one of said opposite side walls, wherein the rods of said cylinders alternately act on at least one radial protrusion (322) of the oscillation pin (32) to yieldably contrast angular movements of the hollow guide about the oscillation axis (Y) .

9. A tool holder assembly according to any one of the preceding claims, wherein the wrist connection means (16) comprise a top joint (162) extending about the rotation axis (Z) and housed, with possibility of rotation, in a joint seat (164) obtained in a top portion of the arm support unit (12), and wherein the third compensator means (26) comprise at least two opposed pneumatic or hydraulic cylinders (262, 264) obtained in, or supported by, said top portion, wherein the rods (266) of said cylinders engage, on opposite sides, a radial abutment (166) of the top joint (16) so as to yieldably contrast a rotation of the tool holder assembly with respect to the top joint about the rotation axis (Z).

10. A tool holder assembly according to the preceding claim, wherein the arm support unit (12) supports or houses at least one radial rotation locking cylinder (40), the rod (42) of said radial locking cylinder being actuatable to engage a respective rod seat (44) obtained in the top joint (166) to angularly lock the tool holder assembly (1) in a predetermined position.

11. A tool holder assembly according to any one of claims 2-10, wherein a spindle (102) is housed in the tool holder arm (10), operatively connected to the motor apparatus (28) and, at the opposite end, to the tool coupling means (14).

12. A tool holder assembly according to any one of the preceding claims, wherein the tool coupling means (14) comprise a couplable cone, such as an ISO cone, for example.

13. A tool holder assembly according to any one of the preceding claims, wherein a plurality of electric and/or pneumatic power supplies (142, 143) is obtained in the tool coupling means for the electric and/or pneumatic actuation of devices connected to the tool holder assembly.
